# DEMANDE DE BREVET EUROPEEN

(11) **EP 2 782 365 A1**
(43) Date de publication de la demande: **24.09.2014**
(21) Numéro de dépôt: 13305319.9
(22) Date de dépôt: 18.03.2013
(51) Int. Cl.: H04W 4/00

(54) **Procédé de récupération d'informations sur un détenteur d'un support de données**

(71) Demandeur: Gemalto SA, 92190 Meudon (FR)
(72) Inventeur: Phan, Ly Thanh, 13705 LA CIOTAT (FR); Fine, Jean-Yves, 13705 LA CIOTAT (FR)

(57) **Abrégé**

L'invention concerne un procédé de récupération d'informations sur un détenteur d'un support de données (10), le support de données (10) comprenant au moins un identifiant de son titulaire, l'identifiant étant apte à être lu par un terminal (12) comprenant un écran, le procédé consistant à lire l'identifiant à l'aide du terminal (12).

Selon l'invention, le procédé consiste à :
- Transmettre l'identifiant à au moins un site Internet comprenant des informations sur le titulaire du support de données (10), par l'intermédiaire d'un serveur (13), pour en récupérer des informations sur le titulaire du support de données (10) ;
- Afficher les informations sur l'écran du terminal (12).

## Description

Le domaine de l'invention est celui des télécommunications et concerne plus précisément un procédé permettant de récupérer des informations sur un détenteur d'un support de données.

On connaît un système appelé « Popwings » (marque protégée) comprenant une carte de visite électronique NFC personnalisée comprenant des informations sur son titulaire.

Une personne intéressée pour obtenir une telle carte de visite doit se connecter à un site Internet dédié (appartenant à la société Popwings) et y entrer des informations personnelles telles que son nom, son prénom, son adresse, un ou plusieurs numéros de téléphone, une adresse e-mail, etc... Ces informations personnelles sont inscrites dans une puce d'une carte sans contact (carte NFC) et la carte est envoyée par courrier à cette personne. La personne détient alors sa propre carte de visite NFC qu'elle peut présenter, par exemple lors de ses déplacements dans des salons, foires ou réunions professionnelles, à d'autres personnes disposant de terminaux avec écrans, généralement mobiles. Ces terminaux sont par exemple des téléphones portables ou smartphones comprenant une application NFC apte à lire les contenus des cartes de visite qui sont approchées des terminaux. Un exposant peut ainsi instantanément récupérer des coordonnées des personnes qu'il a rencontrées lors d'un salon, en lisant et stockant les contenus de plusieurs dizaines voire centaines de cartes de visite électroniques. Il peut également, grâce à cette application, classer les personnes qu'il a rencontrées par nom, entreprise, date de rencontre, ajouter des commentaires à chaque fiche de contact, etc...

La présente invention a pour objectif d'améliorer un tel système de récupération d'informations sur un détenteur d'un support de données (carte NFC ou simple carte de visite papier comme il sera vu par la suite), ce support de données comprenant au moins un identifiant de son titulaire (notamment son nom ou son adresse e-mail par exemple). L'identifiant doit être apte à être lu par un terminal comprenant un écran, tel que par exemple un téléphone portable ou un smartphone.

A cet effet, l'invention propose un procédé de récupération d'informations sur un détenteur d'un support de données, le support de données comprenant au moins un identifiant de son titulaire, l'identifiant étant apte à être lu par un terminal comprenant un écran, le procédé consistant à lire l'identifiant à l'aide du terminal, le procédé consistant à :
- Transmettre l'identifiant à au moins un site Internet comprenant des informations sur le titulaire du support de données, par l'intermédiaire d'un serveur, pour en récupérer des informations sur le titulaire du support de données ;
- Afficher les informations sur l'écran du terminal.

Avantageusement, le procédé consiste à transmettre également un identifiant du titulaire du terminal au serveur afin de récupérer des informations sur le détenteur du terminal à partir d'un site Internet, et à afficher sur l'écran du terminal des informations de compatibilité entre le détenteur du terminal et le détenteur du support de données.

Le support de données est préférentiellement constitué par une carte de visite électronique de type NFC.

Dans un autre mode de mise en oeuvre, le support de données est constitué par une carte comprenant un code lisible par le terminal, par exemple un code QR.

Préférentiellement, le support de données est compris dans un téléphone portable.

Avantageusement, le terminal est un téléphone portable.

Les sites Internet sont préférentiellement des sites de réseaux sociaux. Avantageusement, le serveur est intégré dans le terminal.

D'autres caractéristiques et avantages de la présente invention apparaîtront à la lecture de la description suivante d'un mode de mise en oeuvre préférentiel, donné à titre illustratif et non limitatif, et des figures annexées dans lesquelles :
- La figure 1 représente un système dans lequel la présente invention est mise en oeuvre ;
- La figure 2 représente un procédé de mise en oeuvre préférentiel de la présente invention.

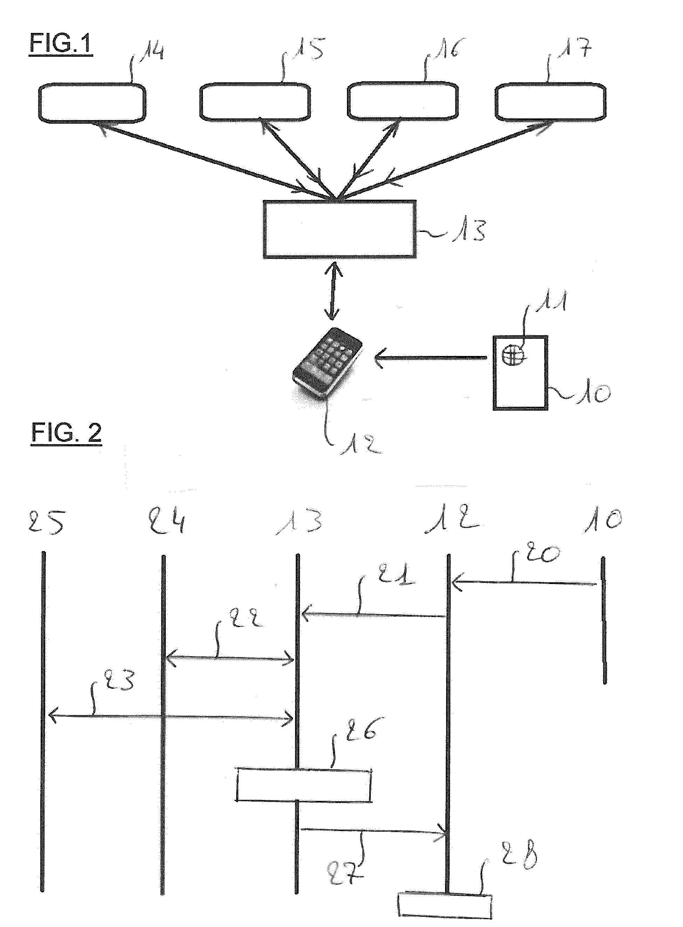

La figure 1 représente un système dans lequel la présente invention est mise en oeuvre.

Dans le système de la figure 1, un support de données 10 comprend au moins un identifiant de son titulaire. Comme il importe, comme il sera vu par la suite, de pouvoir identifier de manière certaine le titulaire du support 10, l'identifiant est par exemple composé du nom et de l'adresse de son titulaire ou alors de son adresse e-mail.

Dans un mode de mise en oeuvre préférentiel, l'identifiant est stocké dans une puce 11 intégrée dans le support 10, cet identifiant pouvant être lu par un terminal 12 comprenant un écran, ici constitué par un smartphone.

Le procédé de l'invention débute classiquement, comme dans le système « Popwings », à lire l'identifiant du titulaire du support 10 à l'aide du terminal 12.

Cette lecture s'effectue préférentiellement par NFC. Dans un autre mode de mise en oeuvre, l'identifiant est un code lisible par le terminal 12. Ce code est par exemple simplement imprimé sur le support 10 qui peut alors être une simple carte en plastique ou en papier. Il s'agit par exemple d'un code QR qui renferme l'identifiant de son titulaire, ce code QR étant photographié par le terminal 12.

L'identifiant est de ce fait transmis au terminal 12.

Le terminal 12 comprend une application dédiée qui transmet alors l'identifiant à un serveur 13 distant pouvant être appelé serveur d'agrégation. Cette transmission s'effectue de préférence par un canal IP. Le serveur 13 est apte à se connecter à au moins un site Internet 14 à 17 comprenant des informations sur le titulaire du support de données 10. Le serveur 13 peut transmettre l'identifiant reçu à tous les sites Internet auxquels il est connecté. Il peut également effectuer une recherche des sites Internet comprenant l'identifiant reçu, ces sites étant susceptibles de contenir des informations sur le titulaire du support 10.

Les sites Internet consultés par le serveur 13 sont préférentiellement des sites de réseaux sociaux de type Facebook, Linkedln, Viadeo, etc... permettant au détenteur du terminal 12 d'accéder à des informations sur le titulaire du support 10, telles que son CV, ses préférences, ses amis déclarés, sa photo, etc... Les requêtes adressées aux sites 14 à 17 par le serveur 13 comprennent préférentiellement des demandes de renseignements précises telles que : âge du titulaire de l'identifiant, profession, diplômes, compétences, loisirs préférés, amis déclarés,... Le ou les sites Internet consultés transmettent en retour les informations demandées au serveur 13. Ce dernier compile alors les informations reçues et les retransmet au terminal 12 qui les affiche sur son écran. Le détenteur du terminal 12 récupère ainsi automatiquement des informations sur le titulaire du support 10.

Ces informations sont préférentiellement stockées dans le terminal 12 en correspondance avec la date à laquelle le terminal 12 a reçu l'identifiant du titulaire du support 10.

Dans un mode de mise en oeuvre préférentiel de la présente invention représenté à la figure 2, il est proposé d'informer le détenteur du terminal 12 de sa compatibilité (affinités, points communs, contacts communs, études communes, professions actuelles ou antérieures, hobbies,...) avec le titulaire du support 10. A cet effet, il est proposé de transmettre au serveur 13 non seulement un identifiant du titulaire du support 10 mais également un identifiant du titulaire du terminal 12 afin de récupérer des informations sur le détenteur du terminal 12 à partir d'un site Internet, et d'afficher sur l'écran du terminal 12 des informations de compatibilité entre le détenteur du terminal 12 et le détenteur du support de données 10.

La mise en oeuvre de ce procédé peut s'opérer comme suit :
Lors d'une étape 20, un identifiant du détenteur du support 10 est transmis au terminal 12. Comme précédemment indiqué, cette transmission est préférentiellement effectuée par NFC.
Lors d'une étape 21, le terminal 12 transmet au serveur 13 l'identifiant reçu ainsi qu'un identifiant du détenteur du terminal 12. Cet identifiant est par exemple son adresse e-mail qu'il a préalablement renseignée auprès d'un site Internet, par exemple auprès d'un site d'un réseau social. Cette transmission peut s'opérer en IP, en 3G (UMTS), 4G (LTE) ou en Wifi.
Le serveur 13 dispose alors des « cartes électroniques » du titulaire du support 10 et du titulaire du terminal 12.
Lors d'étapes 22 et 23, le serveur 13 interroge respectivement un premier site Internet 24 et un second site Internet 25 avec les identifiants respectifs des titulaires du support 10 et du terminal 12. Les sites 24 et 25 répondent au serveur 13 en fournissant les informations demandées. Différents sites Internet peuvent être interrogés successivement jusqu'à ce qu'au moins l'un deux réponde qu'il dispose d'informations sur la personne à qui correspond l'identifiant qui lui a été transmis.
Lors d'une étape 26, le serveur 13 effectue un filtrage des informations reçues pour ne retenir que celles pertinentes et les convertit dans un même format, pour pouvoir les comparer. Le serveur 13 traite les données converties par un algorithme de compatibilité en comparant les informations reçues. Il est à même de fournir des données synthétiques (étape 27) permettant au détenteur du terminal 12 de connaître son degré de compatibilité avec le détenteur du support 10. Alternativement, les données synthétiques peuvent être les points communs entre les deux utilisateurs, par exemple les contacts ou les amis qu'ils ont en commun. Une représentation textuelle ou graphique est également possible.
Lors d'une étape 28, les données synthétiques sont affichées sur l'écran du terminal 12 afin d'être présentées à son détenteur.

Les sites Internet 24 et 25 peuvent être identiques ou différents.

Le support 10 n'est pas nécessairement une carte physique indépendante, par exemple de format d'une carte de crédit ou d'une carte de visite. Il peut s'agir d'un circuit électronique compris dans un terminal mobile tel qu'un téléphone portable ou d'une carte SIM NFC comprise dans un téléphone.

De même, le serveur 13 peut être intégré dans le terminal 12 (au lieu d'être distant). Il s'agit alors d'un logiciel apte notamment à contacter au moins un site Internet pour récupérer des informations sur le titulaire du support de données 10 et éventuellement également des informations sur le titulaire du terminal 12.

Lorsque les sites Internet consultés sont des sites de réseaux sociaux, l'application résidant dans le terminal 12 peut indiquer au serveur 13 à quel site de réseau social il doit se connecter pour la récupération des informations sur les deux utilisateurs. Par exemple, dans un environnement de travail, on privilégiera la connexion à un site d'un réseau social professionnel, tel que Linkedln par exemple, alors que dans un environnement de rencontre convivial, on privilégiera plutôt la connexion à un site personnel tel que Facebook par exemple.

## Revendications

1. Procédé de récupération d'informations sur un détenteur d'un support de données (10), ledit support de données (10) comprenant au moins un identifiant de son titulaire, ledit identifiant étant apte à être lu par un terminal (12) comprenant un écran, ledit procédé consistant à lire ledit identifiant à l'aide dudit terminal (12), **caractérisé en ce qu'il** consiste à :
- Transmettre ledit identifiant à au moins un site Internet (14-17, 24, 25) comprenant des informations sur ledit titulaire dudit support de données (10), par l'intermédiaire d'un serveur (13), pour en récupérer des informations sur ledit titulaire dudit support de données (10) ;
- Afficher lesdites informations sur l'écran dudit terminal (12).

2. Procédé selon la revendication 1, **caractérisé en ce qu'il** consiste à transmettre également un identifiant du titulaire dudit terminal (12) audit serveur afin de récupérer des informations sur le détenteur dudit terminal (12) à partir d'un site Internet (24, 25), et à afficher sur ledit écran dudit terminal (12) des informations de compatibilité entre ledit détenteur dudit terminal (12) et ledit détenteur dudit support de données (10).

3. Procédé selon l'une des revendications 1 et 2, **caractérisé en ce que** ledit support de données (10) est constitué par une carte de visite électronique de type NFC.

4. Procédé selon l'une des revendications 1 et 2, **caractérisé en ce que** ledit support de données (10) est constitué par une carte comprenant un code lisible par ledit terminal (12).

5. Procédé selon la revendication 4, **caractérisé en ce que** ledit code est un code QR.

6. Procédé selon l'une des revendications 1 à 5, **caractérisé en ce que** ledit support de données (10) est compris dans un téléphone portable.

7. Procédé selon l'une des revendications 1 à 6, **caractérisé en ce que** ledit terminal (12) est un téléphone portable.

8. Procédé selon l'une des revendications 1 à 7, **caractérisé en ce que** lesdits sites Internet (14-17, 24, 25) sont des sites de réseaux sociaux.

9. Procédé selon l'une des revendications 1 à 8, **caractérisé en ce que** ledit serveur est intégré dans ledit terminal (12).
